# EUROPÄISCHE PATENTSCHRIFT

(11) **EP 1 439 438 B1**
(45) Veröffentlichungstag und Bekanntmachung des Hinweises auf die Patenterteilung: **04.06.2008**
(21) Anmeldenummer: 03025963.4
(22) Anmeldetag: 13.11.2003
(51) Int. Cl.: G05B 19/042, G01F 1/86

(54) **Messeinrichtung zur Schall-, Dichte-, Durchfluss- und/oder Temperaturmessung**
Measuring device for sound, density, flow and/or temperature
Dispositif de mesure de sons, densité, débit et/ou température

(30) Priorität: 13.11.2002 DE 20217612 U
(43) Veröffentlichungstag der Anmeldung: 21.07.2004
(73) Patentinhaber: Centec Gesellschaft für Labor- und Prozessmesstechnik mbH, 63477 Maintal (DE)
(72) Erfinder: Koukol, Robert, 63454 Hanau/Main (DE); Koukol, Hubert, 63454 Hanau (DE)
(74) Vertreter: Stoffregen, Hans-Herbert

(56) Entgegenhaltungen:
- EP-A- 1 091 332
- DE-A- 10 015 516
- US-B1- 6 330 831
- SIEMENS AG: "SITRANS F Ultrasonic Flowmeters" [Online] 27. Juli 2000 (2000-07-27) , SIEMENS AG XP002272666 Gefunden im Internet: <URL: http://www.seojin.biz/catalog/siem/manual% 20sitransF.pdf> [gefunden am 2004-03-05] * Seite 7 - Seite 11 * * Seite 40 * * Seite 22 * * Seite 37 * * Abbildungen 1-5,2-8,4-2 *
- BRONKHORST: "Polynomial Calibration" FIRMENSCHRIFT, [Online] 6. September 1999 (1999-09-06), XP002272665 Gefunden im Internet: <URL:http://www.bronkhorst.com/pdf/Polynom iaSCal-LL-E-0899.pdf> [gefunden am 2004-03-05]

## Beschreibung

Die vorliegende Erfindung betrifft eine Messeinrichtung nach dem Oberbegriff des Anspruchs 1.

In der Veröffentlichung der Siemens AG "SITRANS F Ultrasonic Flowmeters" ist eine Messeinrichtung zur Bestimmung von Prozessdaten eines Mediums, umfassend einen Schall- und Temperatursensor sowie einen in einem mit dem Sensor verbundenen oder diesen aufnehmenden Gehäuse angeordneten Messumformer zur Verarbeitung eines von dem zumindest einen Sensor gelieferten Rohsignals beschrieben, wobei der Messumformer eine Anzeigeeinheit zur Anzeige der Prozessdaten sowie Bedienelemente zur Eingabe von Parametern sowie zur Auswahl von Menüpunkten aufweist. Allerdings erfolgt bei dieser Messeinrichtung die Auswertung der Prozessdaten in einer externen Auswerteeinheit, wobei die ermittelten Prozessdaten über ein Bussystem zu dieser übertragen werden.

Die aus dem Stand der Technik bekannten Messeinrichtungen mit Schall-, Dichte-, Durchfluss- und/oder Temperatursensoren liefern Rohsignale in Form von Signallaufzeiten, Periodendauern, Strömen und Spannungen die durch einen Messumformer beispielsweise verstärkt, digitalisiert und schließlich einer separaten, d. h. externen Auswerteeinheit wie speicherprogrammierbaren Steuerung über eine Busleitung zugeführt werden. In der externen Auswerteinheit erfolgt schließlich die Berechnung von produktspezifischen Daten wie Schallgeschwindigkeit, Schalldämpfung, Dichte und/oder Konzentration.

Bei den bekannten Messeinrichtungen ist eine Auswertung der Rohsignale daher lediglich in einer Leitstelle durch die externe Auswerteinheit möglich. Vor Ort, d. h. unmittelbar an den Messeinrichtungen, können die Prozessdaten nicht eingesehen werden. Ferner sind die Messumformer bei den bekannten Messeinrichtungen auf die zugehörigen Sensoren abgestimmt, was einen flexiblen Einsatz verhindert.

Davon ausgehend liegt der vorliegenden Erfindung das Problem zugrunde, eine Messeinrichtung der zuvor genannten Art dahingehend weiterzubilden, dass die Auswertung der Prozessdaten vereinfacht und die Flexibilität der Messumformer verbessert wird.

Das Problem wird erfindungsgemäß durch die Merkmale des Anspruchs 1 gelöst.

Der erfindungsgemäße Messumformer bietet den Vorteil, dass eine externe Auswerteeinheit nicht benötigt wird. Vielmehr ist der Messumformer in der Lage, die gewünschten Prozessdaten aus den von dem zumindest einen Sensor zur Verfügung gestellten. Rohsignalen direkt zu berechnen und auf dem Display anzuzeigen. Die Eingabemittel bieten den Vorteil, dass das in der Speichereinheit hinterlegte menügeführte Programm bedienbar ist, so dass in Abhängigkeit von dem an dem Messumformer angeschlossenen Sensor entsprechende Programme und/oder Daten bzw. Funktionen auswählbar sind.

Dabei können produktspezifische Informationen ausgewählt, d. h. eine Sortenwahl unmittelbar an der Messeinrichtung durchgeführt werden. Durch die Produktwahl folgt gleichzeitig eine Umschaltung der für die Berechnung der Prozessparameter erforderlichen mathematischen Polynome.

Eine besonders bevorzugte Ausführungsform der Messeinrichtung zeichnet sich dadurch aus, dass in der Speichereinheit eine Vielzahl verschiedener mathematischer Polynome zur Bestimmung von Prozessdaten hinterlegt sind, so dass der Messumformer zur Messung von Schall, Dichte und Durchfluss und/oder zur kombinierten Messung von Dichte und Schall und/oder Schall und Durchfluss und/oder Schall, Dichte und Durchfluss einsetzbar ist.

Eine weitere vorteilhafte Ausführungsform sieht vor, dass der Messumformer eine Sende-/Empfangseinheit umfasst und über eine Datenkommunikationsleitung wie Profibus mit einer dezentralen Auswerteeinheit wie speicherprogrammierbaren Steuerung verbunden ist. Auf diese Weise wird eine busfähige Messeinrichtung zur Verfügung gestellt, so dass produktspezifische Informationen zwischen der Messeinrichtung und der speicherprogrammierbaren Steuerung ausgetauscht werden können.

Des Weiteren zeichnet sich der erfindungsgemäße Messumformer dadurch aus, dass über die Bedienmittel Kalibrierwerte und weitere sensorspezifischen Größen bedienbar sind. Ein zusätzliches, externes Gerät ist für die gesamte Einstellung und den Einsatz des Messumformers nicht notwendig.

Zur weiteren Verarbeitung der von der Auswerteeinheit zur Verfügung gestellten Signale kann der Messumformer Schnittstellen für Bussysteme wie z. B. Profibus DP, Profibus PA, RS 232 und RS 485 sowie analoge und digitale Messwerte umfassen.

Der Messumformer ist in einem Gehäuse angeordnet, welches einen Flansch zum Anschluss an die verschiedenen Sensoren wie Dichte-Sensor, Ultraschall-Konzentrations- und Durchfluss-Sensor, Ultraschall-Konzentrations-Sensor sowie Ultraschall-Dichte-Sensor ermöglicht. Das Gehäuse umschließt sämtliche Komponenten des Messwnformers, wobei das Display und die Eingabemittel wie Tastaturblock in einer stirnseitigen Abdeckung angeordnet sind. Das Gehäuse ist explosionsgeschützt vorzugsweise nach Ex II 2G, Eex d IIC T6. Ferner ist das Gehäuse spritzwassergeschützt vorzugsweise nach IP 65.

Weitere Einzelheiten, Vorteile und Merkmale der Erfindung ergeben sich nicht nur aus den Ansprüchen, den diesen zu entnehmenden Merkmalen - für sich und/oder in Kombination-, sondern auch aus der nachfolgenden Beschreibung eines den Zeichnungen zu entnehmenden bevorzugten Ausführungsbeispiels.

Es zeigen:
- Fig. 1: ein schematisches Blockschaltbild einer Messeinrichtung mit Messumformer,
- Fig. 2: eine Draufsicht des Messumformers,
- Fig. 3: den Messumformer gem. Fig. 2 in Verbindung mit einem Ultraschall-Konzentrations-Sensor,
- Fig. 4: den Messumformer gem. Fig. 2 in Verbindung mit einem Dichte-Sensor oder Ultraschall-Dichte-Sensor und
- Fig. 5: den Messumformer gem. Fig. 2 in Verbindung mit einem Ultraschall-Konzentrations- und Durchfluss-Sensor.

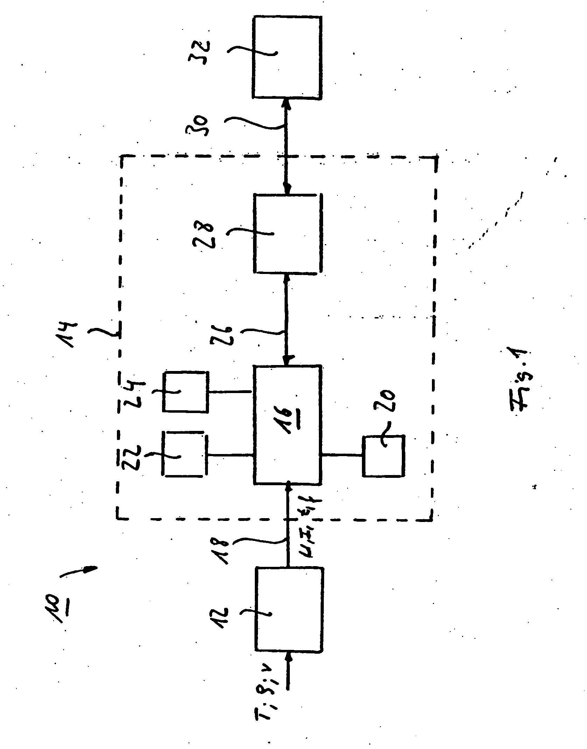

Fig. 1 zeigt rein schematisch ein Blockschaltbild einer Messeinrichtung 10 umfassend einen Messwertaufnehmer 12 wie Schallsensor, Dichtesensor und/oder Durchflusssensor sowie einen mit dem Messwertaufnehmer 12 verbundenen Messumformer 14.

Der Messwertaufnehmer 12 erfasst nichtelektrische Messgrößen wie Temperatur T, Dichte ρ sowie Geschwindigkeit v und formt diese in ein elektrisches Messsignal in Form von Signallaufzeiten, Periodendauern, Strömen und Spannungen um, die einer Auswerteeinheit 16 über eine Zuleitung 18 zugeführt werden. Die Auswerteeinheit 16 besteht aus ein oder mehreren Leiterplatten mit integrierten Schaltkreisen wie Mikrocomputer und miniaturisierten Bauteilen mit einer Speichereinheit 20, in der ein Programm hinterlegt ist, welches ein oder mehrere mathematische Polynome zur Berechnung von gewünschten Prozessdaten aus den von dem Sensor 12 zur Verfügung gestellten Rohdaten ermöglicht.

Zur Steuerung des in der Speichereinheit 20 hinterlegten Programms sind Bedienelemente 22 wie Tasten vorgesehen, über die das vorzugsweise menügeführte Programm steuerbar ist. Die in der Auswerteeinheit 16 unter Berücksichtigung der zuvor ausgewählten und von dem Produkt sowie den gewünschten Prozeßdaten abhängigen mathematischen Polynome können die berechneten Größen wie Schallgeschwindigkeit, Schalldämpfung, Dichte und/oder Konzentration auf einer ebenfalls mit der Auswerteeinheit 16 gekoppelten Anzeigeeinheit 24 wie Display dargestellt werden.

Über eine Schnittstelle 26 ist die Auswerteeinheit 16 mit einem Sender-/Empfangseinheit 28 gekoppelt, die als Teil des Messumformers 14 ausgebildet ist. Ausgangsseitig ist die Sender-/Empfangseinheit 28 über eine Datenleitung 30 wie Profibus mit einer externen Leitstelle wie speicherprogrammierbaren Steuerung 32 verbunden. Über die Datenleitung 30 können selbstverständlich auch Analogwerte übertragen werden.

Durch die Integration der die Berechnung der Prozessdaten aus den zur Verfügung gestellten Rohdaten vornehmenden Auswerteeinheit 16 mit den dazugehörigen in dem Programmspeicher 20 hinterlegten Programmen wird der Vorteil erreicht, dass keine externe Auswerteeinheiten notwendig sind und dass die gewünschten Prozessdaten aus den Sensorrohwerten vor Ort, d. h. unmittelbar in einer Messeinrichtung 10 berechnet und angezeigt werden können.

Über die Bedienelemente 22 ist eine Bedienperson in der Lage, produktspezifische Informationen, d. h. eine Sortenwahl unmittelbar an einer Messeinrichtung vorzunehmen, so dass der Messumformer 14 individuell an verschiedene Messaufnehmer 12 und Produkte angepaßt werden kann. Durch eine entsprechende Produktwahl erfolgt auch eine Umschaltung der für die Berechnung zugrundeliegenden mathematischen Polynome. Weiterhin besteht die Möglichkeit für verschiedene Produkte bzw. Produktnummern Warn- und Alarmgrenzwerte einzugeben. Im Gegensatz zu herkömmliche Messumformern können bei dem erfindungsgemäßen Messumformer Kalibrierwerte und alle anderen sensorspezifischen Größen vor Ort über die Bedienelemente 22 eingegeben werden. Ein zusätzliches externes Gerät ist für die gesamte Einstellung und den Einsatz des Messumformers nicht notwendig.

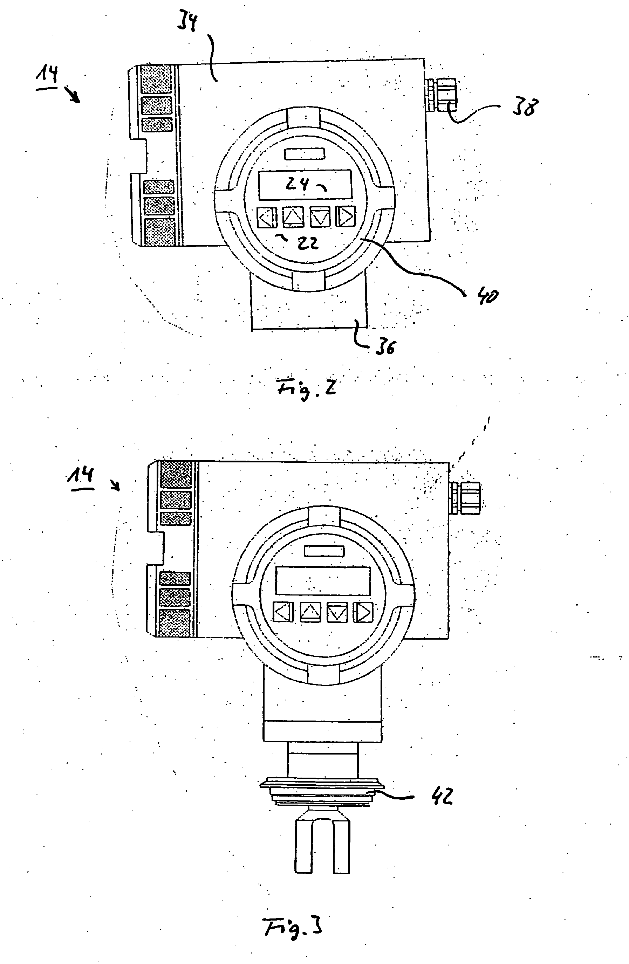

Fig. 2 zeigt eine Draufsicht des Messumformers 14, der in einem Gehäuse 34 angeordnet ist, welches über einen Flanschanschluss 36 mit verschiedenen Sensoren 12, die nachfolgend erläutert werden, verbunden werden kann. Ferner weist das Gehäuse 34 einen Anschluss 38 zur Verbindung mit der Datenübertragungsleitung 30 auf, um eine optionale Verbindung mit einer Leitstelle 32 herzustellen.

Zur Aufnahme der Bedienelemente 22 sowie des Displays 24 ist an dem Gehäuse 34 ein Bedienfeld 40 vorgesehen. Das Gehäuse 34 ist spritzwassergeschützt, vorzugsweise IP 65 sowie explosionsgeschützt nach vorzugsweise Ex II 2G, Eex d IIC T6 ausgebildet.

Als Messprinzipien werden die Schallmessung, Dichtemessung und die Kombination von Schall-/ Dichte-Messung sowie Schall-/Durchfluss-Messungen unterstützt. Als Ausgabesignale stehen nach Berechnung durch die Auswerteeinheit 16 Prozessdaten wie Schallgeschwindigkeit, Dichte und Temperatur sowie alle aus diesen drei Größen berechenbaren Konzentrationen und Messparameter zur Verfugung

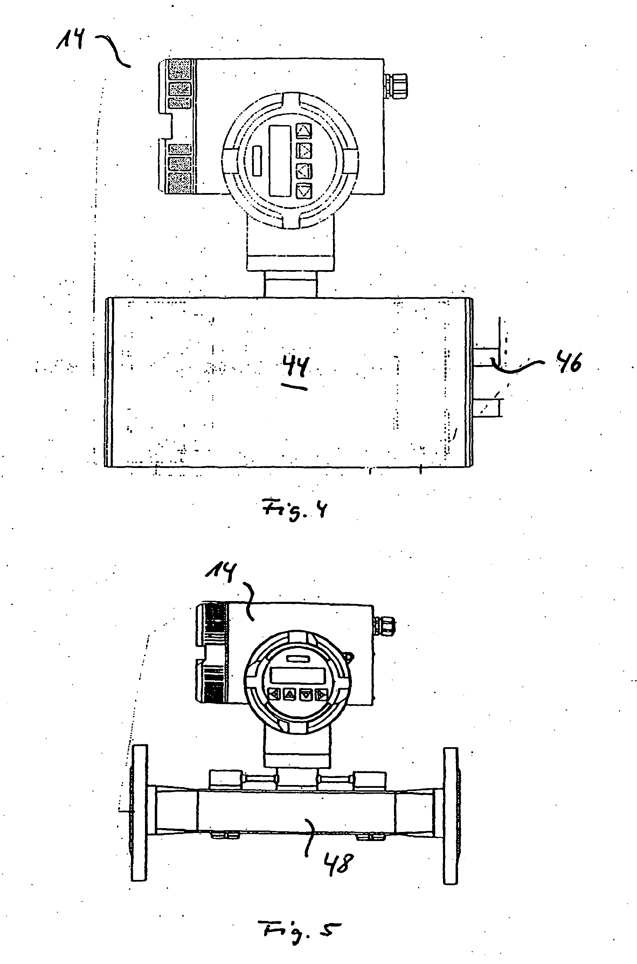

Fig. 3 zeigt den Messumformer 14 in Verbindung mit einem Ultraschall-Konzentrations-Sensor 42 zur genauen und kontinuierlichen Bestimmung der Ultraschallgeschwindigkeit und Temperatur. Derartige Sensoren eignen sich zur qualitativen Prozesskontrolle und/oder Regelung in Brauereien bzw. der Getränkeindustrie sowie bei vielen Applikationen in der Chemieindustrie. In Kombination mit dem in Fig. 4 dargestellten Dichtesensor kann die Zusammensetzung von Drei-Komponenten-Gemischen bestimmt werden, wobei die flexible Bedienbarkeit und Programmierbarkeit des Messumformers 14 von Vorteil ist. Bei dem in Fig. 3 dargestellten Schallgeschwindigkeits-Sensor 42 wird kontinuierlich und hochgenau die Schallgeschwindigkeit in einem fließfähigen Medium bestimmt. Die Schallgeschwindigkeit ist wie die Dichte eine stoff- und konzentrationsabhängige Größe, die zur Bestimmung der Konzentration herangezogen werden kann. In dem als gabelförmiger Messkopf ausgebildeten Ultraschall-Konzentrations-Sensor 42, welcher direkt in eine Produktleitung ragt, wird die Laufzeit eines Schallimpulses auf einer definierten Wegstrecke gemessen. Die Schallimpulse werden durch Piezokristalle erzeugt. Eine Temperaturabhängigkeit der Schallgeschwindigkeit wird dabei durch eine zusätzliche elektronische Temperaturmessung mittels eines Temperatursensors wie beispielsweise PT 1000 kompensiert. Der einfache mechanische Aufbau ohne bewegliche Teile macht den Sensor 42 sehr zuverlässig und verschleißfrei. Die aus dem Messsignal in der Auswerteeinheit 16 berechnete Konzentration kann auf dem Display 24 in Masse%, Volumen% oder Größen wie ° BRIX/Diät, %Extrakt oder andere über die Schallgeschwindigkeit berechenbare Größen des Messmediums angegeben werden. Entsprechend des in der Speichereinheit hinterleg-ten Programms kann eine Anpassung des Messumformers 14 an Flüssigkeit mit gelösten oder ungelösten Bestandteilen - organisch und anorganisch - erfolgen.

Der in Fig. 4 dargestellte Sensor 44 kann als Prozeß-Dichte-Sensor oder als Ultralschall-Dichte-Sensor eingesetzt werden. Der Sensor 44 mit Messumformer 14 ermittelt kontinuierlich und hochgenau die Dichte von fließfähigen Medien auch unter extremen Prozeßbedingungen. Grundlage der Dichtemessung ist die Bestimmung der Schwingungsdauer eines durch Elektromagneten angeregten Biegeschwingers 46. Dieser Biegeschwinger ist als U-förmig gebogenes Rohr ausgeführt und wird vom Messmedium kontinuerlich durchflossen. Eine Eigenfrequenz des U-Rohres wird somit nur von der Dichte des im U-Rohr befindlichen Messmediums beeinflusst und über die gemessene Frequenz ermittelt. Die Temperaturabhängigkeit der Dichte wird dabei durch eine zusätzliche elektronische Temperaturmessung mittels eines Temperatursensors wie beispielsweise PT 1000 kompensiert. Die von dem Messsignal abgeleitete Konzentration kann wahlweise in Masse%, Volumen% oder Größen °BRIX/Diät, %Extrakt oder andere über Dichte berechenbare Größen des Messmediums angegeben werden.

Fig. 5 zeigt die Kombination eines Messumformers 14 mit einem Ultraschall-Konzentrations- und Durchfluss-Sensor 48 zur kontinuierlichen Bestimmung der Ultraschallgeschwindigkeit und der Temperatur und zur gleichzeitigen Ermittlung von Konzentration und Durchfluss. Der Ultraschallsensor 48 bestimmt kontinuierlich und gleichzeitig die Konzentration und den Durchfluss von elektrisch leitenden und nichtleitenden Flüssigkeiten. Das Strömungsprofil hat dabei keinen Einfluß. Die Ausbreitungsgeschwindigkeit der Ultraschallwellen ist abhängig von dem Messmedium und von dessen Strömungsgewindigkeit. Zwei Ultraschallwandler senden sich wechselweise Ultraschallsignale zu, deren Laufzeiten gemessen werden. Bei vorhandener Strömung wird die Schallaufzeit mit der Strömung kürzer, bzw. gegen die Strömung länger, woraus der Volumenstrom bestimmt wird. Die Geschwindigkeit von sich ausbreitenden Ultraschallwellen ist gleichzeitig Stoffspezifisch und ermöglicht somit die Bestimmung der Konzentration des Messmediums. Die Temperaturabhängigkeit wird durch eine zusätzliche elektronische Temperaturmessung mittels PT 1000 kompensiert. Die in der Auswerteeinheit 16 berechnete Konzentration kann je nach Kundenwunsch in Masse%, Volumen% oder weiteren Größen °Brix, %Extrakt usw. angegeben werden.

Als besonderer Vorteil der erfindungsgemäßen Messumformer ist zu erwähnen, dass durch die Integration der intelligenten Auswerteeinheit 16 und Auswahl von in der Speichereinheit 20 hinterlegten Programmteilen durch die Bedienelemente 22 kombinierte Messungen d. h. Dichte-Schallmessungen und/oder Schall-Durchflussmessungen und deren Auswertung vor Ort mit einem an den Sensor angekoppelten Messumformer 14 möglich sind.

## Patentansprüche

1. Messeinrichtung (10) zur Bestimmung von Prozessdaten eines Mediums, umfassend einen Schall- und Temperatursensor (12, 42, 44, 48) sowie einen in einem mit dem Sensor (12) verbundenen oder diesen aufnehmenden Gehäuse (34) angeordneten Messumformer (14) zur Verarbeitung eines von dem zumindest einen Sensor (12) gelieferten Rohsignals, wobei der Messumformer (14) eine Anzeigeeinheit (24) zur Anzeige der Prozessdaten sowie Bedienelemente (22) zur Eingabe von Parametern sowie zur Auswahl von Menüpunkten aufweist,
**dadurch gekennzeichnet,**
**dass** der Messumformer (14) eine Auswerteeinheit (16) zur Vorortbestimmung einer Konzentration des zu messenden Mediums aus den von dem Schall- und Temperatursensor zur Verfügung gestellten Rohsignalen in Abhängigkeit zumindest eines mathematischen Polynoms eines in einer Speichereinheit (20) hinterlegten Programms aufweist, wobei mittels der Bedienelemente produktspezifische Informationen in Form einer Sortenauswahl zur Festlegung des für die Bestimmung zu Grunde liegenden zumindest einen mathematischen Polynoms unmittelbar an den Messumformer (14) auswählbar sind und wobei mittels der Anzeigeeinheit (24) die vor Ort bestimmte Konzentration anzeigbar ist.

2. Messeinrichtung nach Anspruch 1,
**dadurch gekennzeichnet,**
**dass** das in der Speichereinheit (20) hinterlegte Programm über die Eingabemittel (22) menügesteuert ausgebildet ist.

3. Messeinrichtung nach Anspruch 1 oder 2,
**dadurch gekennzeichnet,**
**dass** in der Speichereinheit (20) eine Vielzahl verschiedener mathematischer Polynome zur Bestimmung von Prozessdaten hinterlegt sind.

4. Messeinrichtung nach zumindest einem der vorhergehenden Ansprüche,
**dadurch gekennzeichnet,**
**dass** der Messumformer (14) zur kombinierten Messung von Schall, Dichte und Durchfluss und/oder Dichte und Schall und/oder Dichte und Durchfluss einsetzbar ist.

5. Messeinrichtung nach zumindest einem der vorhergehenden Ansprüche,
**dadurch gekennzeichnet,**
**dass** der Messumformer (14) eine Sende-/Empfangseinheit (28) zur Übertragung der Prozeßdaten über eine Datenkommunikationsleitung (30) wie Profibus an eine dezentrale Auswerteeinheit (32) wie speicherprogrammierbare Steuerung aufweist.

6. Messeinrichtung nach zumindest einem der vorhergehenden Ansprüche,
**dadurch gekennzeichnet,**
**dass** in der Speichereinheit (20) über die Datenkommunikationsleitung (30) übertragene Produktspezifische Daten speicherbar sind.

7. Messeinrichtung nach zumindest einem der vorhergehenden Ansprüche,
**dadurch gekennzeichnet,**
**dass** der Messumformer (14) eine Schnittstelle (38) für ein Bussystem (30) wie Profibus DP, Profibus PA, RS 232 und RS 485 sowie Schnittstellen für analoge und digitale Messwerte umfasst.

8. Messeinrichtung nach zumindest einem der vorhergehenden Ansprüche,
**dadurch gekennzeichnet,**
**dass** das Gehäuse (34) einen Flansch (36) zum Anschluss an die verschiedenen Sensoren (42, 44, 48) aufweist.

9. Messeinrichtung nach zumindest einem der vorhergehenden Ansprüche,
**dadurch** gekenntzeichnet
dass die Anzeigeeinheit (34) und die Bedienelemente (22) wie Tasten in einem stirnseitigen Bedienfeld (40) angeordnet sind.

10. Messeinrichtung nach zumindest einem der vorhergehenden Ansprüche,
**dadurch gekennzeichnet,**
**dass** das Gehäuse (34) explosionsgeschützt, vorzugsweise nach Ex II 2G, Eex d IIC T6 und/oder spritzwassergeschützt, vorzugsweise nach IP 65 ausgebildet ist.

11. Messeinrichtung nach zumindest einem der vorhergehenden Ansprüche,
**dadurch gekennzeichnet,**
**dass** die Auswerteeinheit (16) auf ein oder mehreren Leiterplatten in miniaturisierter Bauweise in dem Gehäuse (34) angeordnet ist.

## Claims

1. Measuring device (10) for determining process data of a medium, comprising a sound and temperature sensor (12, 42, 44, 48) and a measuring transducer (14) arranged inside a housing (34) connected to or accommodating the sensor (12) for processing of a raw signal supplied by the at least one sensor (12), said measuring transducer (14) having a display unit (24) for displaying the process data and control elements (22) for entering parameters and for selecting menu items,
wherein
the measuring transducer (14) has an evaluation unit (16) for in-situ determination of a concentration of the medium to be measured from the raw signals provided by the sound and temperature sensor as a function of at least one mathematical polynomial of a program filed in a memory unit (20), where by means of the control elements product-specific information are selectable directly at the measuring transducer (14) in the form of a type selection for stipulating the at least one mathematical polynomial forming the basis for determination and where the in-situ determined concentration can be displayed by means of the display unit (24).

2. Measuring device according to Claim 1,
wherein
the program filed in the memory unit (20) is designed by menu control using the input means (22).

3. Measuring device according to Claim 1 or Claim 2,
wherein
a plurality of different mathematical polynomials for determining the process data are filed in the memory unit (20).

4. Measuring device according to at least one of the previous claims,
wherein
the measuring transducer (14) is usable for combined measurement of sound, density and flow and/or density and sound and/or density and flow.

5. Measuring device according to at least one of the previous claims,
wherein
the measuring transducer (14) has a transmitting/receiving unit (28) for transmitting the process data via a data communication line (30) such as Profibus to a decentralized evaluation unit (32) such as programmable logic control.

6. Measuring device according to at least one of the previous claims,
wherein
product-specific data transmitted via the data communication line (30) is savable in the memory unit (20).

7. Measuring device according to at least one of the previous claims,
wherein
the measuring transducer (14) comprises an interface (38) for a bus system (30) such as Profibus DP, Profibus PA, RS 232 and RS 485, and interfaces for analog and digital measured values.

8. Measuring device according to at least one of the previous claims,
wherein
the housing (34) has a flange (36) for connection to the various sensors (42, 44, 48).

9. Measuring device according to at least one of the previous claims,
wherein
the display unit (34) and the control elements (22) such as keys are arranged in a control panel (40) at the end.

10. Measuring device according to at least one of the previous claims,
wherein
the housing (34) is designed explosion-proof, preferably in accordance with Ex II 2G, Eex d IIC T6 and/or splash-water-protected, preferably in accordance with IP 65.

11. Measuring device according to at least one of the previous claims,
wherein
the evaluation unit (16) is arranged on one or more PCBs in miniaturized design inside the housing (34).

## Revendications

1. Dispositif de mesure (10) permettant de déterminer des données de processus d'un milieu, comprenant un capteur de son et de température (12, 42, 44, 48) ainsi qu'un transducteur de mesure (14) disposé dans un boîtier (34) relié au capteur (12) ou le contenant, pour le traitement d'un signal brut fourni par le capteur (12) au moins en présence, sachant que le transducteur de mesure (14) présente une unité d'affichage (24) pour l'affichage des données de processus ainsi que des éléments de commande (22) pour l'entrée de paramètres et pour la sélection de points du menu,
**caractérisé en ce**
**que** le transducteur de mesure (14) présente une unité d'analyse (16) pour la détermination sur place d'une concentration du milieu à mesurer à partir des signaux bruts mis à disposition par le capteur de son et de température en fonction d'au moins un polynôme mathématique d'un programme enregistré dans une unité de mémoire (20), sachant que les éléments de commande permettent de sélectionner directement sur le transducteur de mesure (14) des informations spécifiques au produit sous forme de sélection de type afin de définir le polynôme mathématique au moins en présence formant la base de la détermination, et sachant que la concentration déterminée sur place peut être affichée à l'aide de l'unité d'affichage (24).

2. Dispositif de mesure selon la revendication 1,
**caractérisé en ce**
**que** le programme enregistré dans l'unité de mémoire (20) est conçu de manière à être commandé par menu par l'intermédiaire des moyens de saisie (22).

3. Dispositif de mesure selon la revendication 1 ou 2,
**caractérisé en ce**
**qu'**un grand nombre de polynômes mathématiques différents sont enregistrés dans l'unité de mémoire (20) pour la détermination de données de processus.

4. Dispositif de mesure selon au moins une des revendications précédentes,
**caractérisé en ce**
**que** le transducteur de mesure (14) peut être utilisé pour la mesure combinée de son, de densité et de débit et/ou de densité et de son et/ou de densité et de débit.

5. Dispositif de mesure selon au moins une des revendications précédentes,
**caractérisé en ce**
**que** le transducteur de mesure (14) présente une unité d'envoi et de réception (28) pour la transmission des données de processus par l'intermédiaire d'une ligne de communication de données (30) telle que Profibus à une unité d'analyse (32) décentralisée telle qu'une commande à mémoire programmable.

6. Dispositif de mesure selon au moins une des revendications précédentes,
**caractérisé en ce**
**que** des données spécifiques au produit, transmises par l'intermédiaire de la ligne de communication de données (30), peuvent être enregistrées dans l'unité de mémoire (20).

7. Dispositif de mesure selon au moins une des revendications précédentes,
**caractérisé en ce**
**que** le transducteur de mesure (14) comprend une interface (38) pour un système de bus (30) tel que Profibus DP, Profibus PA, RS 232 et RS 485, ainsi que des interfaces pour des valeurs mesurées analogues ou numériques.

8. Dispositif de mesure selon au moins une des revendications précédentes,
**caractérisé en ce**
**que** le boîtier (34) présente une bride (36) pour la connexion à différents capteurs (42, 44, 48).

9. Dispositif de mesure selon au moins une des revendications précédentes,
**caractérisé en ce**
**que** l'unité d'affichage (34) et les éléments de commande (22) sont disposés sous forme de touches d'un panneau de commande frontal (40).

10. Dispositif de mesure selon au moins une des revendications précédentes,
**caractérisé en ce**
**que** le boîtier (34) est, de par sa conception, antidéflagrant, de préférence selon Ex II 2G, Eex d IIC T6 et/ou protégé contre les projections d'eau, de préférence selon IP 65.

11. Dispositif de mesure selon au moins une des revendications précédentes,
**caractérisé en ce**
**que** l'unité d'analyse (16) est disposée sous forme miniaturisée sur une ou plusieurs cartes de circuit imprimé dans un boîtier (34).
